# EUROPEAN PATENT APPLICATION

(11) **EP 4 429 342 A1**
(43) Date of publication of application: **11.09.2024**
(21) Application number: 21962984.7
(22) Date of filing: 05.11.2021
(51) Int. Cl.: H04W 64/00

(54) **LOCATION INFORMATION UPDATING METHOD AND APPARATUS**

(71) Applicant: Beijing Xiaomi Mobile Software Co., Ltd., Beijing 100085 (CN)
(72) Inventor: ZHU, Yajun, Beijing 100085 (CN)
(74) Representative: Stöckeler, Ferdinand
(86) International application number: PCT/CN2021/129132
(87) International publication number: WO 2023/077471

(57) **Abstract**

Embodiments of the present disclosure are applied to the technical field of communications. Discloses are a location information updating method and an apparatus. The method performed by a terminal device comprises: receiving indication information of a network device; wherein the indication information indicates the operation of the terminal device to acquire location information; in response to determining that the location information is expired, the terminal device performs the operation on the basis of the indication information to acquire new location information and update the location information. Thus, the terminal device may update the location information in a timely and effective manner when the location information is expired, thereby avoiding the interference of the uplink transmission between different terminal devices.

## Description

### FIELD

The present disclosure relates to the technical field of communications, and in particular to a method for updating location information and an apparatus.

### BACKGROUND

With the continuous development of Internet of Things applications, the accuracy of terminal location information is increasingly required in complex scenarios where all things are connected.

In the related art, in a satellite communication scenario, a terminal device needs to be located by a GNSS (Global Navigation Satellite System) to determine its own location information, to compensate for uplink synchronization. However, for the terminal device of IoT (Internet of Things), a cellular module and a GNSS module are not supported to work at the same time at present, and when GNSS information of the terminal device is expired, the terminal device will not be able to be located through GNSS.

### SUMMARY

Embodiments of the present disclosure provide a method for updating location information and an apparatus, so that a terminal device may update the location information timely and effectively when the location information is expired, to avoid the interference of the uplink transmission between different terminal devices.

According to a first aspect, embodiments of the present disclosure provide a method for updating location information. The method is performed by a terminal device and includes: receiving indication information of a network device, in which the indication information indicates an operation of the terminal device to acquire the location information; and in response to determining that the location information is expired, acquiring new location information by the terminal device by performing the operation based on the indication information, and updating the location information.

By implementing embodiments of the present disclosure, the indication information of a network device is received, in which the indication information indicates an operation of the terminal device to acquire location information; and in response to determining that the location information is expired, new location information is acquired by the terminal device by performing the operation based on the indication information, and the location information is updated. Therefore, the terminal device may timely and effectively update the location information when the location information is expired, and avoid the interference of the uplink transmission between different terminal devices.

According to a second aspect, embodiments of the present disclosure provide another method for updating location information. The method is performed by the network device, and includes: sending indication information to a terminal device, in which the indication information indicates an operation of the terminal device to acquire the location information.

According to a third aspect, embodiments of the present disclosure provide a communication apparatus, which has the function of realizing part or all of the functions of the terminal device in the method described in the first aspect. For example, the function of the communication apparatus may have the function of part or all of embodiments in the present disclosure, or may have the function of independently implementing any one of embodiments in the present disclosure. The functions may be realized by hardware, or by corresponding software executed by the hardware. The hardware or software includes one or more units or modules corresponding to the above functions.

In one implementation, the structure of the communication apparatus may include a transceiving module. The transceiving module is configured to support the communication between the communication apparatus and other devices. The communication apparatus may also include a storage module. The storage module is configured to couple to the transceiving module and a processing module, and store computer programs and data necessary for the communication apparatus.

As an example, the processing module may be a processor, the transceiving module may be a transceiver or a communication interface, and the storage module may be a memory.

In one implementation, the communication apparatus includes: a transceiving module configured to receive indication information of a network device, in which the indication information indicates an operation of the terminal device to acquire the location information; and in response to determining that the location information is expired, the terminal device acquires new location information by performing the operation based on the indication information, and updates the location information.

According to a fourth aspect, embodiments of the present disclosure provide another communication apparatus, which has the function of realizing part or all of the functions of the network device in the method example described in the second aspect. For example, the function of the communication apparatus may have the function of part or all of embodiments of the present disclosure, or may also have the function of independently implementing any one of embodiments in the present disclosure. The functions may be realized by hardware, or by corresponding software executed by the hardware. The hardware or software includes one or more units or modules corresponding to the above functions.

In one implementation, the structure of the communication apparatus may include a transceiving module. The transceiving module is configured to support the communication between the communication apparatus and other devices. The communication apparatus may also include a storage module. The storage module is configured to couple to the transceiving module and the processing module, and store computer programs and data necessary for the communication apparatus.

In one implementation, the communication apparatus includes a transceiving module configured to send indication information to a terminal device, in which the indication information indicates an operation of the terminal device to acquire location information.

According to a fifth aspect, embodiments of the present disclosure provide a communication apparatus. The communication apparatus includes a processor, and when the processor calls a computer program in a memory, the method described in the first aspect is performed.

According to a sixth aspect, embodiments of the present disclosure provide a communication apparatus. The communication apparatus includes a processor, and when the processor calls a computer program in a memory, the method described in the second aspect is performed.

According to a seventh aspect, embodiments of the present disclosure provide a communication apparatus. The communication apparatus includes a processor and a memory. The memory stores a computer program. The processor executes the computer program stored in the memory, to cause the communication apparatus to perform the method described in the first aspect.

According to an eighth aspect, embodiments of the present disclosure provide a communication apparatus. The communication apparatus includes a processor and a memory. The memory stores a computer program. The processor executes the computer program stored in the memory, to cause the communication apparatus to perform the method described in the second aspect.

According to a ninth aspect, embodiments of the present disclosure provide a communication apparatus. The communication apparatus includes a processor and an interface circuit. The interface circuit is configured to receive code instructions and send the code instructions to the processor, and the processor is configured to run the code instructions to cause the apparatus to perform the method described in the first aspect.

According to a tenth aspect, embodiments of the present disclosure provide a communication apparatus. The communication apparatus includes a processor and an interface circuit. The interface circuit is configured to receive code instructions and send the code instructions to the processor, and the processor is configured to run the code instructions to cause the apparatus to perform the method described in the second aspect.

According to an eleventh aspect, embodiments of the present disclosure provide a communication system. The system includes a communication apparatus described in the third aspect and a communication apparatus described in the fourth aspect, or, the system includes a communication apparatus described in the fifth aspect and a communication apparatus described in the sixth aspect, or the system includes a communication apparatus described in the seventh aspect and a communication apparatus described in the eighth aspect, or the system includes a communication apparatus described in the ninth aspect and a communication apparatus described in the tenth aspect.

According to a twelfth aspect, embodiments of the present invention provide a computer-readable storage medium configured to store instructions for the terminal. When the instructions are executed, the terminal is caused to perform the method described in the first aspect.

According to a thirteenth aspect, embodiments of the present invention provide a readable storage medium configured to store instructions for the network-side device. When the instructions are executed, the network-side device is caused to perform the method described in the second aspect.

According to a fourteenth aspect, the present disclosure also provides a computer program product including a computer program. When the computer program product runs on a computer, the computer is caused to perform the method described in the first aspect.

According to a fifteenth aspect, the present disclosure also provides a computer program product including a computer program. When the computer program product runs on a computer, the computer is caused to perform the method described in the second aspect.

According to a sixteenth aspect, the present disclosure provides a chip system. The chip system includes at least one processor and an interface, and is configured to support a terminal to realize the functions related to the first aspect, for example, determining or processing at least one of data and information related to the above methods. In a possible design, the chip system further includes a memory, and the memory is configured to store computer programs and data necessary for the terminal. The chip system may be comprised of a chip, or may also include a chip and other discrete devices.

According to a seventeenth aspect, the present disclosure provides a chip system. The chip system includes at least one processor and an interface, and is configured to support the network-side device to realize the functions related to the second aspect, for example, determining or processing at least one of data and information related to the above methods. In a possible design, the chip system further includes a memory, and the memory is configured to store computer programs and data necessary for the network-side device. The chip system may be comprised of a chip, or may also include a chip and other discrete devices.

According to an eighteenth aspect, the present disclosure provides a computer program, and when the computer program runs on a computer, the computer is caused to perform the method described in the first aspect.

According to a nineteenth aspect, the present disclosure provides a computer program, and when the computer program runs on a computer, the computer is caused to perform the method described in the second aspect above.

### BRIEF DESCRIPTION OF THE DRAWINGS

In order to more clearly explain the technical solution in embodiments of the present disclosure or the background technology, the drawings needed in embodiments of the present disclosure or the background technology will be explained below.
FIG. 1 is a schematic structural diagram of a communication system provided by an embodiment of the present disclosure;
FIG. 2 is a flowchart of a method for updating location information provided by an embodiment of the present disclosure;
FIG. 3 is a flowchart of another method for updating location information provided by an embodiment of the present disclosure;
FIG. 4 is a flowchart of yet another method for updating location information provided by an embodiment of the present disclosure;
FIG. 5 is a flowchart of yet another method for updating location information provided by an embodiment of the present disclosure;
FIG. 6 is a flowchart of yet another method for updating location information provided by an embodiment of the present disclosure;
FIG. 7 is a flowchart of yet another method for updating location information provided by an embodiment of the present disclosure;
FIG. 8 is a flowchart of yet another method for updating location information provided by an embodiment of the present disclosure;
FIG. 9 is a schematic structural diagram of a communication apparatus provided by an embodiment of the present disclosure;
FIG. 10 is a schematic structural diagram of another communication apparatus provided by an embodiment of the present disclosure; and
FIG. 11 is a schematic structural diagram of a chip provided by an embodiment of the present disclosure.

### DETAILED DESCRIPTION

In order to facilitate understanding, the terms involved in the present disclosure are first introduced.

### 1. Global Navigation Satellite System (GNSS).

Global navigation satellite system (GNSS) generally refers to all satellite navigation systems, including global, regional and augmented ones, such as the U.S. GPS, Russia's Glonass, Europe's Galileo, China's Beidou satellite navigation system, and related augmentation systems, such as the U.S. WAAS (Wide Area Augmentation System), Europe's EGNOS (European Geostationary Navigation Overlay System) and Japan's MSAS (Multifunctional Transportation Satellite Augmentation System), and also containing other satellite navigation systems under construction and to be built in the future.

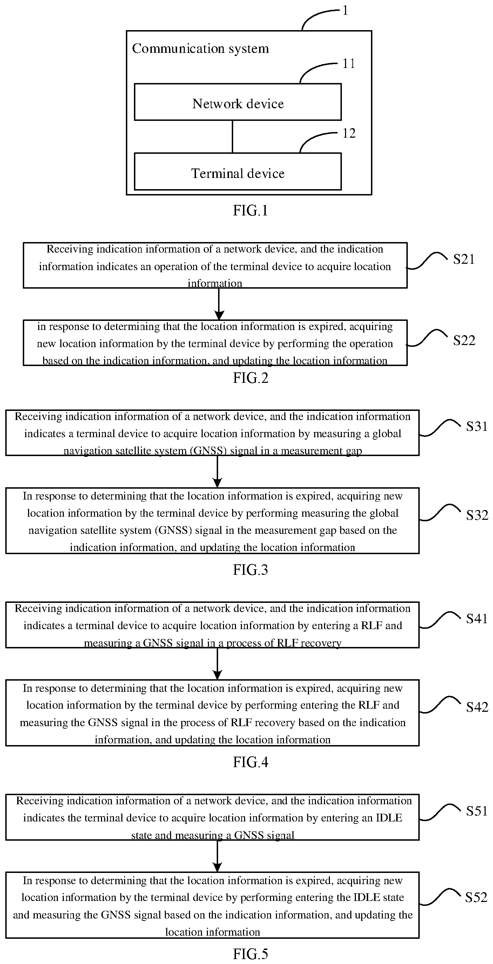

Please refer to FIG. 1, FIG. 1 is a schematic structural diagram of a communication system 1 provided by an embodiment of the present disclosure. The communication system may include, but is not limited to, one network device and one terminal device. The number and form of device illustrated in FIG. 1 are only for example and do not constitute a limitation to embodiments of the present disclosure. In practical application, two or more network devices and two or more terminal devices may be included. As an example, the communication system 1 illustrated in FIG. 1 includes one network device11 and one terminal device 12.

It should be noted that the technical solution of embodiments of the present disclosure may be applied to various communication systems, such as long term evolution (LTE) system, 5th generation (5G) mobile communication system, 5G new radio (NR) system, or other new mobile communication systems in the future.

The network device11 in embodiments of the present disclosure is an entity on the network side for sending or receiving signals. For example, the network device101 may be an evolved NodeB (eNB), a transmission reception point (TRP), a next generation NodeB (gNB) in the NR system, a base station in other future mobile communication systems or an access node in a wireless fidelity (WiFi) system. Embodiments of the present disclosure do not limit the specific technology and the specific device form adopted by the network device. The network device provided by embodiments of the present disclosure may be comprised of a central unit (CU) and a distributed unit (DU), where CU may also be called a control unit. By adopting the structure of CU-DU, the protocol layers of the network device, such as a base station, may be split. Functions of part of protocol layers are centrally controlled in the CU, while functions of part or all of the remaining protocol layers are distributed in the DU, and the DU is centrally controlled by CU.

The terminal device 12 in embodiments of the present disclosure is an entity on the user side for receiving or sending signals, such as a mobile phone. The terminal device may also be called terminal device (terminal), user equipment (UE), mobile station (MS), mobile terminal device (MT) and so on. The terminal device may be a car with communication function, a smart car, a mobile phone, a wearable device, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. Embodiments of the present disclosure do not limit the specific technology and the specific device form adopted by the terminal device.

It may be understood that the communication system described in embodiments of the present disclosure is for the purpose of more clearly explaining the technical solution of embodiments of the present disclosure, and does not constitute a limitation on the technical solution provided by embodiments of the present disclosure. Those skilled in the art may know that with the evolution of the system architecture and the emergence of new business scenarios, the technical solution provided by embodiments of the present disclosure is also applicable to similar technical problems.

A method for updating location information and an apparatus provided by the present disclosure will be introduced in detail with the attached drawings below.

Please refer to FIG. 2, and FIG. 2 is a flowchart of a method for updating location information provided by an embodiment of the present disclosure.

As illustrated in FIG. 2, the method is performed by a terminal device, and the method may include but not limited to the following steps.

At S21, indication information of a network device is received, and the indication information indicates an operation of the terminal device to acquire the location information.

At S22, in response to determining that the location information is expired, new location information is acquired by the terminal device by performing the operation based on the indication information, and the location information is updated.

It may be understood that the terminal device acquires the location information through GNSS, and the location information of the terminal device is valid for a period of time. If the terminal device has not performed the measurement of a GNSS signal when more than the period of time has elapsed, the location information of the terminal device will expire.

In embodiments of the present disclosure, the terminal device receives the indication information of the network device, and acquires new location information by performing the operation indicated by the indication information in response to determining that the location information is expired, and updates the location information.

It may be understood that in embodiments of the present disclosure, the terminal device receives the indication information of the network device, and may always perform the corresponding operation based on the indication information to update the location information when determining that the location information is expired several times later, without acquiring the indication information before each update of the location information. After receiving the indication information, the terminal device may always perform the operation indicated by the indication information when subsequent update of the location information, and it is not necessary to re-acquire the indication information when the indication information is not changed.

The indication information may be information with a fixed length.

In an exemplary embodiment, the indication information may be the information of 2 bit, where "00" indicates that the terminal device performs one operation, "01" indicates that the terminal device performs another operation, "10" indicates that the terminal device performs yet another operation, and so on.

In another exemplary embodiment, the indication information may be the information of 3 bit, where "000" indicates that the terminal device performs one operation, "001" indicates that the terminal device performs another operation, "010" indicates that the terminal device performs yet another operation, and so on.

It should be noted that the above-mentioned examples are only for illustration, and do not serve as specific limitations on embodiments of the present disclosure. The indication information of embodiments of the present disclosure is not limited to the ways in the above examples, but also may be in other ways of meeting the requirements. Embodiments of the present disclosure do not specifically limit this.

In embodiments of the present disclosure, the operation of the terminal device to acquire the location information indicated by the indication information of the network device may be indicating the terminal device to perform an existing specific operation, or indicating the terminal device to perform a newly configured operation, and embodiments of the present disclosure do not specifically limit this.

The newly configured operation may be newly configured to the terminal device by the network device, or may be newly configured to the terminal device by a protocol, or newly configured to the terminal by other ways, and embodiments of the present disclosure do not specifically limit this.

In some embodiments, the operation of the terminal device to acquire the location information indicated by the indication information includes one of:
measuring a global navigation satellite system (GNSS) signal in a measurement gap;
entering a radio link failure (RLF), and measuring the GNSS signal in a process of RLF recovery; and
entering an IDLE state and measuring the GNSS signal.

In embodiments of the present disclosure, the operation of the terminal device to acquire the location information indicated by the indication information of the network device may be measuring the global navigation satellite system (GNSS) signal in the measurement gap, or entering RLF (radio link failure) and measuring the GNSS signal in the process of RLF recovery, or entering the IDLE state and measuring the GNSS signal.

In embodiments of the present disclosure, in case that the operation includes measuring the global navigation satellite system (GNSS) signal in the measurement gap, the terminal device receives the indication information of the network device, and the indication information indicates the terminal device to acquire the location information by performing measuring the global navigation satellite system (GNSS) signal in the measurement gap; and in case that the terminal device determines that the location information is expired, the terminal device acquires new location information by performing measuring the global navigation satellite system (GNSS) signal in the measurement gap according to the received indication information, and updates the location information.

In embodiments of the present disclosure, in case that the operation includes entering the radio link failure (RLF) and measuring the GNSS signal in the process of RLF recovery, the terminal device receives the indication information of the network device, and the indication information indicates the terminal device to acquire the location information by performing entering the radio link failure (RLF) and measuring the GNSS signal in the process of RLF recovery; and in case that the terminal device determines that the location information is expired, the terminal device acquires the new location information by performing entering the radio link failure (RLF) and measuring the GNSS signal in the process of RLF recovery according to the received indication information, and updates the location information.

In embodiments of the present disclosure, in case that the operation includes entering the IDLE state and measuring the GNSS signal, the terminal device receives the indication information of the network device, and the indication information indicates the terminal device to acquire the location information by performing entering the IDLE state and measuring the GNSS signal; and in case that the terminal device determines that the location information is expired, the terminal device acquires new location information by performing entering the IDLE state and measuring the GNSS signal according to the received indication information, and updates the location information.

By implementing embodiments of the present disclosure, the indication information of the network device is received, in which the indication information indicates the operation of the terminal device to acquire the location information; and in response to determining that the location information is expired, new location information is acquired by the terminal device by performing the operation based on the indication information, and the location information is updated. Therefore, the terminal device may timely and effectively update the location information when the location information is expired, and avoid the interference of the uplink transmission between different terminal devices.

Please refer to FIG. 3, and FIG. 3 is a flowchart of another method for updating location information provided by an embodiment of the present disclosure.

As illustrated in FIG. 3, the method is performed by the terminal device, and the method may include but not limited to the following steps:
At S31, indication information of the network device is received, and the indication information indicates the terminal device to acquire location information by measuring a global navigation satellite system (GNSS) signal in the measurement gap.
At S32, in response to determining that the location information is expired, new location information is acquired by the terminal device by performing measuring the global navigation satellite system (GNSS) signal in the measurement gap based on the indication information, and the location information is updated.

In embodiments of the present disclosure, in case that the terminal device receives the indication information of the network device, and the indication information indicates the terminal device to acquire location information by measuring the global navigation satellite system (GNSS) signal in the measurement gap; and in case that the terminal device determines that the location information is expired, the terminal device acquires new location information by performing measuring the global navigation satellite system (GNSS) signal in the measurement gap according to the received indication information, and updates the location information.

In some embodiments, the measurement gap is a value specific to the terminal device or a value common to all terminal devices in a cell.

It may be understood that the measurement gap is a value specific to the terminal device, which means that the terminal devices in the same cell may have different measurement gaps; and he measurement gap is a value common to all terminal devices in the cell, which means that all terminal devices in the same cell use the same measurement gap.

In some embodiments, the terminal device continues to maintain a radio resource control (RRC) connection with the network device in the measurement gap.

It may be understood that the terminal device continues to maintain RRC connection with the network device in the measurement gap, and treats the transmission of location information in the same way as the transmission of service data by the terminal device.

In some embodiments, the terminal device does not perform downlink control monitoring, downlink signal measurement, downlink data reception and uplink data transmission in the measurement gap.

In embodiments of the present disclosure, the terminal device measures the GNSS signal in the measurement gap. In the measurement gap, other control information including downlink control monitoring, downlink signal measurement, downlink data reception and uplink data transmission is not transmitted. In the measurement gap, only the GNSS signal is transmitted and will not be affected by other signals, which makes the measurement result more accurate.

Please refer to FIG. 4, and FIG. 4 is a flowchart of yet another method for updating location information provided by an embodiment of the present disclosure.

As illustrated in FIG. 4, the method is performed by the terminal device, and the method may include but not limited to the following steps.

At S41, indication information of the network device is received, and the indication information indicates the terminal device to acquire location information by entering a RLF and measuring a GNSS signal in a process of RLF recovery.

At S42, in response to determining that the location information is expired, new location information is acquired by the terminal device by performing entering the RLF and measuring the GNSS signal in the process of RLF recovery based on the indication information, and the location information is updated.

In embodiments of the present disclosure, in case that the terminal device receives the indication information of the network device, and the indication information indicates the terminal device to acquire location information by performing entering the RLF and measuring the GNSS signal in the process of RLF recovery; and in case that the terminal device determines that the location information is expired, the terminal device acquires new location information by performing entering the RLF and measuring the GNSS signal in the process of RLF recovery according to the received indication information, and updates the location information.

In some embodiments, in the process of RLF recovery by the terminal device, the terminal device completes the measurement of the GNSS signal and re-acquires the GNSS information, and the terminal device reports link recovery information to a high level.

Please refer to FIG. 5, and FIG. 5 is a flowchart of yet another method for updating location information provided by an embodiment of the present disclosure.

As illustrated in FIG. 5, the method is performed by the terminal device, and the method may include but not limited to the following steps.

At S51, indication information of the network device is received; and the indication information indicates the terminal device to acquire location information by entering an IDLE state and measuring a GNSS signal.

At S52, in response to determining that the location information is expired, new location information is acquired by the terminal device by performing entering an IDLE state and measuring a GNSS signal based on the indication information, and the location information is updated.

In embodiments of the present disclosure, in case that the terminal device receives the indication information of the network device, and the indication information indicates the terminal device to acquire the location information by performing entering the IDLE state and measuring the GNSS signal; and in case that the terminal device determines that the location information is expired, the terminal device acquires new location information by performing entering the IDLE state and measuring the GNSS signal according to the received indication information, and updates the location information.

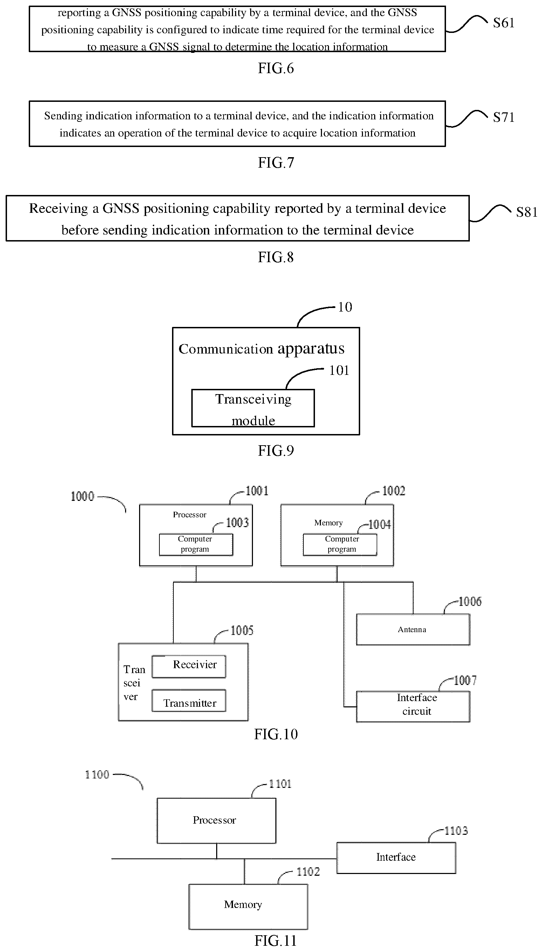

Please refer to FIG. 6, and FIG. 6 is a flowchart of yet another method for updating location information provided by an embodiment of the present disclosure.

As illustrated in FIG. 6, the method is performed by the terminal device, and the method may include but not limited to the following steps.

At S61, a GNSS positioning capability is reported by the terminal device, and the GNSS positioning capability is configured to indicate time required for the terminal device to measure the GNSS signal to determine the location information.

In embodiments of the present disclosure, the terminal device reports the GNSS positioning capability to inform the network device of the time required for the terminal device to measure the GNSS signal to determine the location information.

In some embodiments, the time-frequency resources used by the terminal device to report the GNSS positioning capability may be pre-configured to the terminal device.

In embodiments of the present disclosure, pre-configuring the time-frequency resources used by the terminal device to report the GNSS positioning capability to the terminal device may be understood as pre-configuring the location of the radio resources specifically used by the terminal device to report the GNSS positioning capability, and when and on what frequency the terminal device reports the GNSS positioning capability.

The pre-configuration may be pre-configured by the network device, or may also be specified by the protocol, or it may also be pre-configured in other ways, and embodiments of the present disclosure do not specifically limit this.

In some embodiments, the terminal device reports the GNSS positioning capability in a process of the terminal device establishing an RRC connection with the network device.

In embodiments of the present disclosure, the terminal device accesses the network device, and reports the GNSS positioning capability in the process of establishing the RRC connection with the network device.

In other embodiments, the terminal device reports the GNSS positioning capability before the location information is expired.

It may be understood that the terminal device acquires the location information through GNSS, and the location information of the terminal device is valid for a period of time. If the terminal device has not performed the measurement of the GNSS signal when more than the period of time has elapsed, the location information of the terminal device will expire.

It should be noted that S61 may be implemented alone or in combination with any of the other steps in embodiments of the present disclosure, for example, in combination with S21 and S22 and/or S31 and S32 and/or S41 and S42 and/or S51 and S52 in embodiments of the present disclosure, which is not limited by embodiments of the present disclosure.

Please refer to FIG. 7, and FIG. 7 is a flowchart of yet another method for updating location information provided by an embodiment of the present disclosure.

As illustrated in FIG. 7, the method is performed by the network device, and the method may include but is not limited to the following steps.

At S71, indication information is sent to a terminal device, and the indication information indicates an operation of the terminal device to acquire the location information.

It may be understood that the terminal device acquires the location information through GNSS, and the location information of the terminal device is valid for a period of time. If the terminal device has not performed the measurement of a GNSS signal when more than the period of time has elapsed, the location information of the terminal device will expire.

It may be understood that in embodiments of the present disclosure, the terminal device receives the indication information of the network device, and may always perform the corresponding operation to update the location information based on the indication information when determining that the location information is expired several times later, without acquiring the indication information before each update of location information. After receiving the indication information, the terminal device may always perform the operation indicated by the indication information when subsequent update of the location information, and it is not necessary to re-acquire the indication information when the indication information is not changed.

In embodiments of the present disclosure, the terminal device receives the indication information of the network device, and in response to determining that the location information is expired, the terminal device acquires new location information by performing the operation indicated by the indication information, and updates the location information.

The indication information may be information with a fixed length.

In an exemplary embodiment, the indication information may be the information of 2 bit, where "00" indicates that the terminal device performs one operation, "01" indicates that the terminal device performs another operation, "10" indicates that the terminal device performs yet another operation, and so on.

In another exemplary embodiment, the indication information may be the information of 3 bit, where "000" indicates that the terminal device performs one operation, "001" indicates that the terminal device performs another operation, "010" indicates that the terminal device performs yet another operation, and so on.

It should be noted that the above-mentioned examples are only for illustration, and do not serve as specific limitations on embodiments of the present disclosure. The indication information of embodiments of the present disclosure is not limited to the ways in the above examples, but also may be in other ways of meeting the requirements. Embodiments of the present disclosure do not specifically limit this.

In embodiments of the present disclosure, the operation of the terminal device to acquire the location information indicated by the indication information of the network device may be indicating the terminal device to perform an existing specific operation, or indicating the terminal device to perform a newly configured operation, and embodiments of the present disclosure do not specifically limit this.

The newly configured operation may be newly configured to the terminal device by the network device, or may be newly configured to the terminal device by a protocol, or newly configured to the terminal by other ways, and embodiments of the present disclosure do not impose specifically limit this.

In some embodiments, the operation of the terminal device to acquire the location information indicted by the indication information includes one of:
measuring a global navigation satellite system (GNSS) signal in a measurement gap;
entering a radio link failure (RLF), and measuring the GNSS signal in a process of RLF recovery; and
entering an IDLE state and measuring the GNSS signal.

In embodiments of the present disclosure, the operation of the terminal device to acquire the location information indicated by the indication information of the network device may be measuring the global navigation satellite system (GNSS) signal in the measurement gap, or entering the radio link failure (RLF) and measuring the GNSS signal in the process of RLF recovery, or entering the IDLE state and measuring the GNSS signal.

In embodiments of the present disclosure, in case that the operation includes measuring the global navigation satellite system (GNSS) signal in the measurement gap, the terminal device receives the indication information of the network device, and the indication information indicates the terminal device to acquire the location information by performing measuring the GNSS signal in the measurement gap. In case that the terminal device determines that the location information is expired, the terminal device acquires new location information by performing measuring the global navigation satellite system (GNSS) signal in the measurement gap according to the received indication information, and updates the location information.

In embodiments of the present disclosure, in case that the operation includes entering the radio link failure (RLF) and measuring the GNSS signal in the process of RLF recovery, the terminal device receives the indication information of the network device, and the indication information indicates the terminal device to acquire the location information by performing entering the radio link failure (RLF) and measuring the GNSS signal in the process of RLF recovery; and in case that the terminal device determines that the location information is expired, the terminal device acquires new location information by performing entering the radio link failure (RLF) and measuring the GNSS signal in the process of RLF recovery according to the received indication information, and updates the location information.

In embodiments of the present disclosure, in case that the operation includes entering the IDLE state and measuring the GNSS signal, the terminal device receives the indication information of the network device, and the indication information indicates the terminal device to acquire the location information by performing entering the IDLE state and measuring the GNSS signal, and in case that the terminal device determines that the location information is expired, the terminal device acquires new location information by performing entering the IDLE state and measuring the GNSS signal according to the received indication information, and updates the location information.

By implementing embodiments of the present disclosure, the indication information is sent to the terminal device, the indication information indicates the operation of the terminal device to acquire the location information. Therefore, the terminal device may timely and effectively update the location information when the location information is expired, and avoid the interference of the uplink transmission between different terminal devices.

Please refer to FIG. 8, and FIG. 8 is a flowchart of yet another method for updating location information provided by an embodiment of the present disclosure.

As illustrated in FIG. 8, the method is performed by the network device, and the method may include but is not limited to the following steps.

At S81, a GNSS positioning capability reported by the terminal device is received before sending the indication information to the terminal device.

In embodiments of the present disclosure, the terminal device reports the GNSS positioning capability to inform the network device of the time required for the terminal device to measure the GNSS signal to determine the location information.

In some embodiments, the time-frequency resources used by the terminal device to report the GNSS positioning capability may be pre-configured to the terminal device.

In embodiments of the present disclosure, pre-configuring the time-frequency resources used by the terminal device to report the GNSS positioning capability to the terminal device may be understood as pre-configuring the location of the radio resources specifically used by the terminal device to report the GNSS positioning capability, and when and on what frequency the terminal device reports the GNSS positioning capability.

The pre-configuration may be pre-configured to the network device, or may also be specified by the protocol, or it may also be pre-configured in other ways, and embodiments of the present disclosure do not specifically limit this.

In embodiments of the present disclosure, the network device may send the indication information to the terminal device according to the received GNSS positioning capability reported by the terminal, to indicate the terminal device to perform the corresponding operation to measure the GNSS signal and determine location information.

It should be noted that S81 may be implemented alone or in combination with any of the other steps in embodiments of the present disclosure, for example, in combination with S71 in embodiments of the present disclosure, which is not limited by embodiments of the present disclosure.

In the above embodiments provided by the present disclosure, the methods provided by embodiments of the present disclosure are introduced from the perspectives of the network device and the terminal device, respectively. In order to realize the functions in the method provided by embodiments of the present disclosure, the network device and the terminal device may include a hardware structure and a software module, and realize the above functions in the form of the hardware structure, the software module, or a combination of the hardware structure and the software module. One of the above functions may be implemented in the manner of the hardware structure, the software module, or a combination of the hardware structure and the software module.

Please refer to FIG. 9, and FIG. 9 is a schematic structural diagram of a communication apparatus 10 provided by an embodiment of the present disclosure. The communication apparatus 10 illustrated in FIG. 9 may include a transceiving module 101. The transceiving module 101 may include a sending module and/or a receiving module. The sending module is configured to realize the sending function, the receiving module is configured to realize the receiving function, and the transceiving module 101 may realize the sending function and/or the receiving function.

The communication apparatus 10 may be a terminal device, an apparatus in the terminal device, or an apparatus that may be used in conjunction with the terminal device. Alternatively, the communication apparatus 10 may be a network device, an apparatus in the network device, or an apparatus that may be used in conjunction with the network device.

Communication apparatus 10 is a terminal device.

The apparatus includes a transceiving module 101 configured to receive the indication information of the network device, and the indication information indicates the operation of the terminal device to acquire location information; and in response to determining that the location information is expired, the terminal device acquires new location information by performing the operation based on the indication information, and updates the location information.

Communication apparatus 10 is a network device.

The apparatus includes a transceiving module 101 configured to send indication information to the terminal device, and the indication information indicates the operation of the terminal device to acquire location information.

With regard to the communication apparatus 10 in the above embodiments, the specific way in which each module performs the operation has been described in detail in embodiments of the method, and will not be described in detail here. The communication apparatus 10 provided in above embodiments of the present disclosure has the same or similar beneficial effects as the method for updating location information provided in some of the above embodiments, and will not be described in detail here.

Please refer to FIG. 10, and FIG. 10 is a schematic structural diagram of another communication apparatus 1000 provided by an embodiment of the present disclosure. The communication apparatus 1000 may be a network device; a terminal device; a chip, a chip system or a processor supporting the network device to realize the above-mentioned method; or a chip, a chip system or a processor supporting the terminal device to realize the above-mentioned method. The communication apparatus 1000 may be configured to realize the method described in the above embodiments of the method, and please refer to the description in the above embodiments of the method for details.

Communication apparatus 1000 may include one or more processors 1001. The processor 1001 may be a general-purpose processor or a special-purpose processor or the like, e.g., a baseband processor or a central processing unit. Baseband processor may be configured to process communication protocols and communication data, and central processor may be configured to control communication apparatus (such as base station, baseband chip, terminal device, terminal device chip, DU or CU, etc.), execute computer programs, and process data of computer programs.

Optionally, the communication apparatus 1000 may further include one or more memories 1002, on which a computer program 1004 may be stored. The memory 1002 executes the computer program 1004, the communication apparatus 1000 is caused to perform the method described in the above embodiments of method. Optionally, data may also be stored in the memory 1002. The communication apparatus 1000 and the memory 1002 may be set separately or integrated together.

Optionally, the communication apparatus 1000 may further include a transceiver 1005 and an antenna 1006. The transceiver 1005 may be called a transceiver unit, a transceiving machine, a transceiver circuit, etc., and configured to realize the transceiving function. The transceiver 1005 may include a receiver and a transmitter, and the receiver may be called a receiving machine or a receiving circuit, etc., and is configured to realize the receiving function; and the transmitter may be called a sending machine or a sending circuit, etc., and is configured to realize the sending function.

Optionally, the communication apparatus 1000 may further include one or more interface circuits 1007. The interface circuit 1007 is configured to receive code instructions and send them to the processor 1001. The processor 1001 executes the code instructions to cause the communication apparatus 1000 to perform the method described in the above embodiments of the method.

When the communication apparatus 1000 is a terminal device, the transceiver 1005 is configured to execute S21 and S22 in FIG. 2, S31 and S32 in FIG. 3, S41 and S42 in FIG. 4, S51 and S52 in FIG. 5, and S61 in FIG. 6.

When the communication apparatus 1000 is a network device, the transceiver 1005 is configured to execute S71 in FIG. 7, and S81 in FIG. 8.

In one implementation, the processor 1001 may include a transceiver configured to realize receiving and sending functions. For example, the transceiver may be a transceiver circuit, or an interface, or an interface circuit. The transceiver circuit, the interface or the interface circuit configured to realize receiving and sending functions may be separated or integrated. The transceiver circuit, the interface or the interface circuit may be configured to read and write codes/data, or may be configured to signal transmission or transfer.

In one implementation, the processor 1001 may store a computer program 1003, and the computer program 1003 runs on the processor 1001, which may cause the communication apparatus 1000 to perform the method described in the above embodiments of the method. The computer program 1003 may be solidified in the processor 1001, in which case the processor 1001 may be implemented by hardware.

In one implementation, the communication apparatus 1000 may include a circuit, which may realize the functions of sending or receiving or communication in the aforementioned embodiments of the method. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and transceiver may also be manufactured by various IC process technologies, such as complementary metal oxide semiconductor (CMOS), nMetal-oxide semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus described in the above embodiments may be the terminal device, but the scope of the communication apparatus described in the present disclosure is not limited to this, and the structure of the communication apparatus may not be limited by FIG. 10. The communication apparatus may be an independent device or may be part of a large device. For example, the communication apparatus may be:
(1) an independent integrated circuit (IC), or a chip, or, a chip system or subsystem;
(2) an integration with one or more ICs, and optionally, the IC integration may also include a storage component configured to store data and computer programs;
(3) ASIC, such as modem;
(4) a module that may be embedded in other devices;
(5) a receiver, terminal device, intelligent terminal device, cellular phone, wireless device, handset phone, mobile unit, vehicle-mounted device, network device, cloud device, artificial intelligence device, etc.
(6) Others, etc.

In case that the communication apparatus may be a chip or a chip system, please refer to FIG. 11, which is a structural diagram of a chip provided in an embodiment of the present disclosure.

Chip 1100 includes a processor 1101 and an interface 1103. The number of processors 1101 may be one or more, and the number of interfaces 1103 may be more than one.

In case that the chip is configured to realize the function of the terminal device in embodiments of the present disclosure:
the interface 1103 is configured to receive code instructions and sending them to the processor; and
the processor 1101 is configured to execute code instructions to perform the method for updating location information as described in some embodiments above.

In case that the chip is configured to realize the function of the network device in embodiments of the present disclosure:
the interface 1103 is configured to receive code instructions and sending them to the processor; and
the processor 1101 is configured to execute code instructions to perform the method for updating location information as described in some embodiments above.

Optionally, the chip 1100 further includes a memory 1102 and the memory 1102 is configured to store necessary computer programs and data.

Those skilled in the art may also understand that various illustrative logical blocks and steps listed in embodiments of the present disclosure may be implemented by electronic hardware, computer software, or a combination of both. Whether this function is realized by hardware or software depends on the specific application and the design requirements of the whole system. Those skilled in the art may use various methods to realize the described functions for each specific application, but the realization should not be understood as beyond the scope of protection of embodiments of the present disclosure.

Embodiments of the present disclosure also provide a system for updating location information, and the system includes the communication apparatus serving as a terminal and the communication apparatus serving as a network-side device in the aforementioned embodiments of FIG. 10, or the system includes the communication apparatus serving as a terminal and the communication apparatus serving as a network-side device in the aforementioned embodiments of FIG. 11.

The present disclosure also provides a readable storage medium having stored thereon instructions which, when executed by a computer, realize the function of any of the above embodiments of the method.

The present disclosure also provides a computer program product, and when the computer program product is executed by a computer, the function of any of the above embodiments of the method is realized.

In the above embodiments, embodiments may be realized in whole or in part by software, hardware, firmware or any combination thereof. When realized in software, it may be realized in whole or in part in the form of a computer program product. The computer program product includes one or more computer programs. When the computer program is loaded and executed on a computer, the flow or function according to embodiments of the present disclosure is generated in whole or in part. The computer may be a general-purpose computer, a special-purpose computer, a computer network, or other programmable apparatus. The computer program may be stored in a computer-readable storage medium or transmitted from one computer-readable storage medium to another computer-readable storage medium. For example, the computer program may be transmitted from a website, computer, server or data center to another website, computer or data center by wired (such as coaxial cable, optical fiber, digital subscriber line (DSL)) or wireless (such as infrared, wireless, microwave, etc.) means. The computer-readable storage medium may be any available medium that a computer may access or a data storage device that contains one or more available media integration such as a server, data center or the like. The available medium may be a magnetic medium (e.g., floppy disk, hard disk, magnetic tape), an optical medium (e.g., high-density digital video disc (DVD)), or a semiconductor medium (e.g., solid state disk (SSD)) and the like.

It may be understood by those skilled in the art that the first, second and other numerical numbers involved in the present disclosure are only for the convenience of description and distinguishing, which are not configured to limit the scope of embodiments of the present disclosure, nor indicate the order.

"At least one" in the present disclosure may also be described as one or a plurality, and the plurality may be two, three, four or more, which is not limited by the present disclosure. In embodiments of the present disclosure, for a technical feature, the technical features in the technical feature are distinguished by "first", "second", "third", "A", "B", "C" and "D", and there is no time order or size order between the technical features described by "first", "second", "third", "A", "B", "C" and "D".

The correspondence illustrated in each table in the present disclosure may be configured or predefined. The values of the information in each table are only examples, and may be configured as other values, which is not limited by the present disclosure. When configuring the correspondence between information and parameters, it is not necessary to configure all the correspondence indicated in each table. For example, in the table in the present disclosure, the corresponding relationship illustrated by some rows may not be configured. For another example, appropriate deformation adjustments may be made based on the above table, such as splitting, merging and so on. The names of the parameters indicated by the headings in the above tables may also be other names that may be understood by communication apparatus, and the values or representations of the parameters may also be other values or representations that may be understood by the communication apparatus. Other data structures may also be used when the above tables are implemented, such as arrays, queues, containers, stacks, linear tables, pointers, linked lists, trees, graphs, structures, classes, heaps, hash tables, etc.

Pre-definition in the present disclosure may be understood as definition, pre-definition, storage, pre-storage, pre-negotiation, pre-configuration, solidifying, or pre-firing.

One of ordinary skill in the art may realize that the units and algorithm steps of various examples described in connection with embodiments disclosed herein may be implemented in electronic hardware, or a combination of computer software and electronic hardware. Whether these functions are implemented in hardware or software depends on the specific application and design's constraints of the technical solution. Skilled people may use different methods to implement the described functions for each specific application, but such implementation should not be considered beyond the scope of the present disclosure.

It may be clearly understood by those skilled in the art that for the convenience and conciseness of description, the specific working processes of the system, apparatus and unit described above may refer to the corresponding processes in the aforementioned embodiments of the method, which will not be repeated here.

The above is only the specific implementation of the present disclosure, while the protection scope of the present disclosure is not limited to this. Any skilled person familiar with the technical field may easily think of changes or substitutions within the technical scope disclosed in the present disclosure, which should be included in the protection scope of the present disclosure. Therefore, the scope of protection of the present disclosure should be based on the scope of protection of the claims.

## Claims

1. A method for updating location information, performed by a terminal device, comprising:
receiving indication information of a network device, wherein the indication information indicates an operation of the terminal device to acquire the location information; and
in response to determining that the location information is expired, acquiring new location information by the terminal device by performing the operation based on the indication information, and updating the location information.

2. The method according to claim 1, wherein the operation comprises one of:
measuring a global navigation satellite system (GNSS) signal in a measurement gap;
entering a radio link failure (RLF), and measuring the GNSS signal in a process of RLF recovery; and
entering an IDLE state, and measuring the GNSS signal.

3. The method according to claim 2, wherein in case that the operation comprises measuring the GNSS signal in the measurement gap, the terminal device performs measuring the GNSS signal in the measurement gap.

4. The method according to claim 3, wherein the measurement gap is a value specific to the terminal device or a value common to all terminal devices in a cell.

5. The method according to claim 3 or 4, wherein the terminal device continues to maintain a radio resource control (RRC) connection with the network device in the measurement gap.

6. The method according to any one of claims 3 to 5, wherein the terminal device does not perform a downlink control monitoring, a downlink signal measurement, a downlink data reception and an uplink data transmission in the measurement gap.

7. The method according to claim 2, wherein in case that the operation comprises entering the RLF and measuring the GNSS signal in the process of RLF recovery, the terminal device performs entering the RLF and measuring the GNSS signal in the process of RLF recovery.

8. The method according to claim 7, further comprising:
reporting link recovery information by the terminal device to a high level.

9. The method according to claim 2, wherein in case that the operation comprises entering the IDLE state and measuring the GNSS signal, the terminal device performs entering the IDLE state and measuring the GNSS signal.

10. The method according to any one of claims 1 to 9, further comprising:
reporting a GNSS positioning capability by the terminal device, wherein the GNSS positioning capability is configured to indicate time required for the terminal device to measure the GNSS signal to determine the location information.

11. The method according to claim 10, further comprising:
reporting the GNSS positioning capability by the terminal device in a process of the terminal device establishing the RRC connection with the network device.

12. The method according to claim 10, further comprising:
reporting the GNSS positioning capability by the terminal device before the location information is expired.

13. A method for updating location information, performed by a network device, comprising:
sending indication information to a terminal device, wherein the indication information indicates an operation of the terminal device to acquire the location information.

14. The method according to claim 13, wherein the operation comprises one of:
measuring a global navigation satellite system (GNSS) signal in a measurement gap;
entering a radio link failure (RLF), and measuring the GNSS signal in a process of RLF recovery,; and
entering an IDLE state, and measuring the GNSS signal.

15. The method according to claim 13 or 14, further comprising:
receiving a GNSS positioning capability reported by the terminal device before sending the indication information to the terminal device.

16. A communication apparatus comprising:
a transceiving module configured to receive indication information of a network device, wherein the indication information indicates an operation of a terminal device to acquire location information; and in response to determining that the location information is expired, the terminal device acquires new location information by performing the operation based on the indication information, and updates the location information.

17. A communication apparatus comprising:
a transceiving module configured to send indication information to a terminal device, wherein the indication information indicates an operation of the terminal device to acquire the location information.

18. A communication apparatus comprising a processor and a memory, wherein the memory stores a computer program thereon, and the processor is configured to execute the computer program stored in the memory, to cause the apparatus to perform a method according to any one of claims 1-12.

19. A communication apparatus comprising a processor and a memory, wherein the memory stores a computer program thereon, and the processor is configured to execute the computer program stored in the memory, to cause the apparatus to perform a method according to any one of claims 13-15.

20. A communication apparatus comprising: a processor and an interface circuit;
wherein the interface circuit is configured to receive code instructions and sending the code instructions to the processor;
the processor is configured to run the code instructions to perform a method according to any one of claims 1 to 12.

21. A communication apparatus comprising: a processor and an interface circuit;
wherein the interface circuit is configured to receive code instructions and sending the code instructions to the processor; and
the processor is configured to run the code instructions to perform a method according to any one of claims 13 to 15.

22. A computer-readable storage medium configured to store instructions, wherein when the instructions are executed, a method according to any one of claims 1 to 12 is implemented.

23. A computer-readable storage medium configured to store instructions, wherein when the instructions are executed, a method according to any one of claims 13 to 15 is implemented.
